(19) **Europäisches Patentamt / European Patent Office / Office européen des brevets**

(11) **EP 2 245 779 B1**

(12) **FASCICULE DE BREVET EUROPEEN**

(45) Date de publication et mention de la délivrance du brevet:
**24.04.2019 Bulletin 2019/17**

(21) Numéro de dépôt: **09709070.8**

(22) Date de dépôt: **02.02.2009**

(51) Int Cl.:
**H04L 1/06** (2006.01)   **H04L 25/03** (2006.01)

(86) Numéro de dépôt international:
**PCT/EP2009/051141**

(87) Numéro de publication internationale:
**WO 2009/098178 (13.08.2009 Gazette 2009/33)**

(54) **PROCEDE DE DECODAGE D'UN SIGNAL TRANSMIS DANS UN SYSTEME MULTI-ANTENNES, PRODUIT PROGRAMME D'ORDINATEUR ET DISPOSITIF DE DECODAGE CORRESPONDANTS**

DEKODIERVERFAHREN FÜR EIN IN EINEM MEHRANTENNENSYSTEM ÜBERTRAGENES SIGNAL SOWIE DAZU ENTSPRECHEND, EIN COMPUTERPROGRAMM UND EINE DEKODIERVORRICHTUNG

METHOD FOR DECODING A SIGNAL IN A MULTIPLE-ANTENNA SYSTEM, AND CORRESPONDING COMPUTER SOFTWARE PRODUCT AND DECODING DEVICE

(84) Etats contractants désignés:
**AT BE BG CH CY CZ DE DK EE ES FI FR GB GR HR HU IE IS IT LI LT LU LV MC MK MT NL NO PL PT RO SE SI SK TR**

(30) Priorité: **04.02.2008   FR 0850690**

(43) Date de publication de la demande:
**03.11.2010   Bulletin 2010/44**

(73) Titulaire: **Groupe des Ecoles des Télécommunications - Ecole Nationale Supérieure des Télécommunications**
**75634 Paris Cedex 13 (FR)**

(72) Inventeurs:
 • **REKAYA-BEN OTHMAN, Ghaya**
 **F-92160 Antony (FR)**
 • **BELFIORE, Jean-Claude**
 **F-75013 Paris (FR)**
 • **OUERTANI, Rym**
 **2000 Tunis (TN)**

(74) Mandataire: **Hnich-Gasri, Naïma**
**Marks & Clerk France**
**Immeuble Visium**
**22, avenue Aristide Briand**
**94117 Arcueil Cedex (FR)**

(56) Documents cités:
**WO-A-2007/087540**

 • **ANDY LAU ET AL: "A Sequential Soft-Decision Decoder for Reed-Solomon Codes Applied to Encoded PSK in Rayleigh-Fading Channels" IEEE TRANSACTIONS ON VEHICULAR TECHNOLOGY, IEEE SERVICE CENTER, PISCATAWAY, NJ, US, vol. 45, no. 1, 1 février 1996 (1996-02-01), XP011063469 ISSN: 0018-9545**
 • **FU-QUAN WANG, DANIEL COSTELLO: "A Hybrid M-algorithm/Sequential Decoder for Convolutional and Trellis Codes" UNIVERSITY OF NOTRE DAME, INDIANA, DEPARTMENT OF ELECTRICAL ENGINEERING, [Online] 29 juin 1990 (1990-06-29), pages 1-5, XP002507933 Extrait de l'Internet: URL:http://ntrs.nasa.gov/archive/nasa/casi .ntrs .nasa.gov/19900017212_1990017212.pdf> [extrait le 2008-12-10]**
 • **ASENSTORFER J ET AL: "A hybrid sequential-Viterbi decoder" 1986 IEEE INTERNATIONAL SYMPOSIUM ON INFORMATION THEORY (ISIT). ABSTRACTS OF PAPERS (CAT. NO.86CH2374-7), ANN ARBOR, MI, USA, 1 janvier 1986 (1986-01-01), page 140, XP001539108**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

**1. Domaine de l'invention**

Le domaine de l'invention est celui des communications sans fil. Plus précisément, l'invention concerne la réception de signaux dans le cadre de systèmes MIMO (en anglais « Multiple-Input Multiple-Output », en français « Entrées Multiples Sorties Multiples »), mettant en oeuvre une ou plusieurs antennes de réception.
L'invention trouve notamment des applications dans le domaine des radiocommunications mobiles.

**2. Solutions de l'art antérieur**

De nombreuses techniques de transmission dans des systèmes comprenant de multiples antennes sont connues, comme décrit par exemple dans :

- Asenstorfer et al: "A hybrid sequential-Viterbi decoder" 1986 IEEE International,Symposium On Information Theory (ISIT). Abstracts of Papers (GAT. NO.86CH2374-7), 01.01.1986, page 140, XP0015391 08, qui porte sur un décodage de codes correcteur d'erreurs de type convolutifs ou en Trellis ;
- Lau et al: "A Sequential Soft-Decision Decoder for Reed-Solomon Codes Applied to Encoded PSK in Rayleigh-Fading Channels" IEEE Transactions On Vehicular Technology, vol. 45, no. 1, 1.2.1996, XP011063469 ISSN: 0018-9545, qui présente un décodeur séquentiel adapté aux codes de Reed-Solomon dans le cadre des canaux Rayleigh Fading ;
- WO 2007/087540 qui porte sur un système et une méthode permettant de faciliter la mesure de code et l'ordre de modulation pour la sélection d'un démodulateur de réception de paquets de données ;
- Wang, Castello: "A Hybrid M-algorithm/Sequential Decoder for Convolutional and Trellis Codes" University Of Notre Dame, Indiana, Department Of Electrical Engineering, 29.06.1990, pages 1-5, XP002507933 qui présente un algorithme de décodage pour des codes spécifiques de type code de convolution ou code en treillis.

Certaines techniques existantes permettent d'atteindre une capacité de transmission accrue en augmentant l'efficacité spectrale dans le canal de transmission, grâce à l'utilisation de codes espace/temps en émission. Ces codes espace/temps permettent notamment de répartir les symboles modulés sur les différents degrés de liberté du canal.

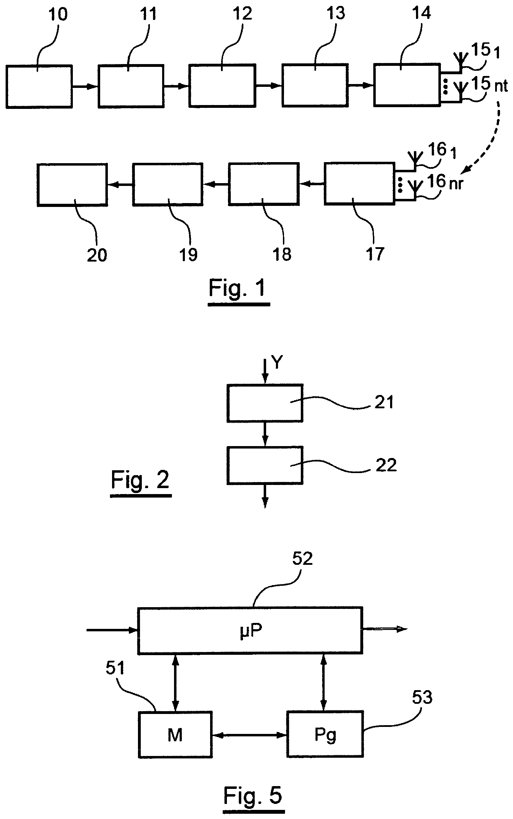

La figure 1 illustre plus précisément un schéma de transmission dans un système multi-antennes.
Côté émission, un signal source binaire 10 à émettre subit un codage de source 11, puis un codage de canal 12. Il traverse ensuite un module de modulation 13, destiné à convertir des éléments binaires en symboles complexes : un tel module associe ainsi à un groupe de bits un symbole complexe appartenant à une constellation (de type QAM par exemple). On procède ensuite à un codage spatio-temporel 14 de chaque groupe de K symboles, qui sont ensuite émis sur $n_t$ antennes d'émission $15_1$ à $15n_t$ dans un contexte de transmission de type MIMO.
Le signal est ensuite véhiculé à travers un canal de transmission, puis reçu sur les $n_r$ antennes de réception $16_1$ à $16n_r$. Chaque antenne de réception reçoit une combinaison linéaire des symboles émis sur chacune des $n_t$ antennes d'émission. Le signal reçu est tout d'abord décodé dans un module de décodage spatio-temporel 17, mettant en oeuvre un traitement inverse au codage espace/temps mis en oeuvre en émission.
Le signal égalisé en sortie du bloc de décodage espace/temps 17 alimente ensuite un module de démodulation 18, avant de subir des opérations de décodage de canal 19 et décodage de source 20, délivrant un signal binaire estimé.
Malheureusement, du fait de l'utilisation de plusieurs antennes, le décodage des signaux reçus est particulièrement complexe.
En effet, afin d'obtenir de bonnes performances de décodage, il est nécessaire d'utiliser une technique de décodage optimale au sens du maximum de vraisemblance dans le module de décodage 17, comme le décodage par sphères ou l'algorithme de Schnorr-Euchner.
Or la complexité de ces techniques augmente énormément en fonction du nombre d'antennes et du nombre d'états de la modulation.
Certaines techniques mettent en place un mécanisme de time-out permettant de limiter le temps de décodage d'un bloc donné et de déclarer un effacement de bloc. Un algorithme spécifique de récupération de bloc est alors implémenté, et un autre décodeur est utilisé pour remplacer le décodeur défaillant.
Le principe consiste à arrêter un décodeur à partir une certaine complexité, et de finir le décodage par une autre méthode. Ce n'est pas un décodage adaptatif, parce que le décodeur est fixé au départ, et le critère d'arrêt qui peut être fonction du canal est utilisé par la suite et non initialement pour choisir le décodeur.
Par conséquent, il existe un besoin pour une nouvelle technique de réception des signaux dans les systèmes mettant en oeuvre plusieurs antennes d'émission et/ou de réception, présentant une complexité réduite.

**3. Exposé de l'invention**

L'invention présente une solution nouvelle qui ne présente pas ces inconvénients de l'art antérieur sous la forme d'un procédé de décodage selon la revendication 1 d'un signal émis par un émetteur via un canal de transmission et reçu par un récepteur comprenant une ou plusieurs antennes de réception.

Ainsi, l'invention repose sur une approche nouvelle et inventive du décodage d'un signal reçu dans un système multi-antennes, permettant de sélectionner une technique de décodage parmi plusieurs techniques disponibles au niveau du récepteur.

La technique de décodage sélectionnée représentative d'un codage espace/temps mis en oeuvre en émission. Autrement dit, il s'agit d'une technique de décodage spatio-temporel.

De cette façon, il est possible d'adapter la technique de décodage à la situation, en tenant par exemple compte de la qualité du canal de transmission ou des spécifications du système multi-antennes.

En particulier, les étapes de sélection et de décodage sont mises en oeuvre de façon adaptative, périodiquement et/ou en fonction d'une variation du canal de transmission.

Ainsi, il est possible de changer la technique de décodage utilisée au cours de la transmission, périodiquement et/ou en fonction d'une variation du canal de transmission.

Le schéma adaptatif proposé par l'invention permet aussi d'avoir un schéma de décodage avec plus faible complexité. Le schéma adaptatif proposé par l'invention présente également, un autre avantage. En effet ce schéma permet d'avoir une complexité moyenne de décodage constante pour différents rapports signal sur bruit et aussi pour différentes réalisations du canal. Ce qui n'est pas le cas pour les autres schémas, où la complexité dépend du rapport signal sur bruit.

En particulier, on cherche à optimiser les performances ou la complexité de décodage, ou un compromis entre ces deux grandeurs, sur toute la durée de la transmission.

Selon un aspect particulier de l'invention, les techniques de décodage disponibles comprennent au moins une technique de décodage optimale au sens du maximum de vraisemblance (ou ML, en anglais « Maximum Likelihood ») et au moins une technique de décodage sous-optimale.

On entend notamment par technique de décodage sous-optimale une technique de décodage ne permettant pas d'atteindre les performances d'une technique de type ML. Une telle technique de décodage sous-optimale est donc moins complexe, et nécessite moins de ressources qu'une technique optimale.

Par exemple, les techniques de décodage appartiennent au groupe comprenant :

- une technique de décodage linéaire « Zero-Forcing » (ZF) ;
- une technique de décodage linéaire « Minimum Mean Square Error » (MMSE) ;
- une technique de décodage à retour de décision « Zero-Forcing - Decision Feedback Equalization » (ZF-DFE) ;
- une technique de décodage à retour de décision « Minimum Mean Square Error - Decision Feedback Equalization » (MMSE-DFE) ;
- une technique de décodage par sphères;
- une technique de décodage basée sur l'algorithme de Schnorr-Euchner ;
- une technique de décodage séquentiel de Fano ou toute forme modifiée de cette technique ;
- une technique de décodage séquentiel à pile (« stack decoder »), ou toute forme modifiée de cette technique ;

D'autres techniques de décodage peuvent également être utilisées.

Ainsi, il est possible selon cet aspect de l'invention de sélectionner une technique de décodage optimale ou une technique de décodage sous optimale en tenant compte d'au moins un critère de sélection, comme la qualité du canal de transmission ou les spécifications du système multi-antennes.

Selon un premier exemple, au moins un critère de sélection tient compte d'une probabilité de coupure du canal de transmission.

Plus précisément, cette probabilité de coupure (en anglais « outage probability ») correspond à la probabilité que la capacité instantanée du canal de transmission soit inférieure ou égale au rendement de transmission, où le rendement de transmission correspond au nombre de bits transmis (c'est-à-dire à l'efficacité spectrale en bits) par utilisation canal.

Ce critère de sélection tient donc compte des conditions du canal de transmission.

Par exemple, on considère que l'étape de sélection sélectionne une technique de décodage sous-optimale lorsque la capacité instantanée du canal de transmission est inférieure au rendement de transmission, en bits par utilisation canal, et sélectionne une technique de décodage optimale lorsque la capacité instantanée du canal de transmission est supérieure ou égale au rendement de transmission, en bits par utilisation canal.

Ainsi, si le canal de transmission est de bonne qualité, il est possible de sélectionner une technique de décodage optimale au sens du maximum de vraisemblance, présentant de bonnes performances en terme de taux d'erreur. Si la qualité du canal de transmission se dégrade au cours de la transmission, il est possible d'adapter la technique de décodage, en sélectionnant une technique de décodage sous-optimale, présentant de moins bonnes performances en terme de taux d'erreur, mais de complexité réduite en terme d'opérations mathématiques. Ensuite, il est de nouveau possible de revenir à une technique de décodage optimale lorsque la qualité du canal de transmission s'améliore.

Bien entendu, différentes techniques de décodage optimales peuvent être mises en oeuvre au cours d'une même transmission, comme le décodage par sphères, l'algorithme Schnorr-Euchner, le décodage séquentiel de Fano, le décodage séquentiel à pile, ou toute forme modifiée du « stack decoder », etc.

De même, différentes techniques sous-optimales peuvent être mises en oeuvre au cours d'une même transmission, comme le décodage linéaire ZF ou MMSE, le décodage à retour de décision ZF-DFE ou MMSE-DFE, ou le décodage séquentiel avec un biais b différent de 0, etc.

En particulier, les décodeurs séquentiels peuvent mettre en oeuvre une technique de décodage optimale, lorsqu'ils présentent un biais b égal à 0, ou une technique de décodage sous-optimale, lorsqu'ils présentent un biais b différent de 0. Autrement dit, le « stack decoder », ou toute forme modifiée de ce décodeur, présente des performances allant de celles d'un décodeur ZF-DFE à celles d'un décodeur au sens ML. De tels décodeurs sont notamment décrits dans le document « A Unified Frameworkfor Tree Search Decoding: Rediscovering the Sequential Decoder » (A. D. Murugan, H. El Gamal, M. O. Damen et G. Caire, 13 mai 2005).

Par conséquent, en modifiant uniquement le paramètre b d'un tel décodeur, c'est-à-dire sans ajouter de ressources matérielles (« hardware ») complémentaires dans l'implémentation du récepteur, il est possible de mettre en oeuvre aussi bien une technique de décodage optimale qu'une technique de décodage sous-optimale.

Selon un deuxième exemple, au moins un critère de sélection tient compte d'au moins un taux d'erreur cible en fonction d'un rapport signal à bruit.

Ce critère de sélection tient donc compte des spécifications du système de transmission.

Plus précisément, on définit selon ce deuxième exemple un taux d'erreur maximum (taux d'erreur cible) que l'on doit respecter pour différents rapports signal à bruit. On peut définir un unique taux d'erreur cible $Pe_{cible}$ à respecter pour l'ensemble des rapports signal à bruit, ou bien différents taux d'erreur cible $Pe_{cible}$, correspondant chacun à un rapport signal à bruit ou une plage de rapports signal à bruit.

Il est alors possible de pré-sélectionner une ou plusieurs techniques de décodage permettant de respecter ce ou ces taux d'erreur cible.

En particulier, si plusieurs techniques de décodage permettent de respecter ce ou ces taux d'erreur cible, l'étape de sélection peut sélectionner la technique de décodage présentant le taux d'erreur le plus faible parmi les techniques pré-sélectionnées. Selon une autre variante, l'étape de sélection peut sélectionner la technique de décodage présentant la complexité la plus faible parmi les techniques pré-sélectionnées.

Selon un troisième exemple, l'étape de sélection tient compte de plusieurs critères de sélection. Par exemple, elle tient à la fois compte des conditions de transmission et des spécifications du système de transmission.

Selon cet exemple, le procédé de décodage met en oeuvre un premier critère de sélection tenant compte d'au moins un taux d'erreur cible en fonction d'un rapport signal à bruit, de façon à définir au moins deux plages de rapports signal à bruit, et, pour chacune desdites plages, un deuxième critère de sélection tenant compte d'une probabilité de coupure du canal dans ladite plage.

Autrement dit, on définit plusieurs taux d'erreur cible $Pe_{cible}$ à respecter pour différentes plages de rapport signal à bruit, tel que décrit précédemment en relation avec le deuxième exemple. Par exemple, on définit un taux d'erreur cible de 1 pour un rapport signal à bruit compris entre 0 et 15, un taux d'erreur cible de 0,1 pour un rapport signal à bruit compris entre 15 et 20, et un d'erreur cible de 0,01 pour un rapport signal à bruit supérieur à 20.

Ensuite, pour chaque plage de rapport signal à bruit, on applique le deuxième critère de sélection tenant compte d'une probabilité de coupure du canal dans la plage, tel que décrit précédemment en relation avec le premier exemple.

Un autre aspect de l'invention concerne également un produit programme d'ordinateur selon la revendication 7 téléchargeable depuis un réseau de communication et/ou enregistré sur un support lisible par ordinateur et/ou exécutable par un processeur, comprenant des instructions de code de programme pour la mise en oeuvre du procédé de décodage tel que décrit précédemment.

Dans un autre mode de réalisation, l'invention concerne un dispositif de décodage selon la revendication 8 d'un signal émis par un émetteur via un canal de transmission et reçu par un récepteur comprenant une ou plusieurs antennes de réception.

Un tel dispositif de décodage est notamment adapté à mettre en oeuvre le procédé de décodage décrit précédemment. Il peut être intégré dans un récepteur d'un système MIMO, comprenant une ou plusieurs antennes de réception.

Ce dispositif pourra bien sûr comporter les différentes caractéristiques relatives au procédé de décodage selon l'invention.

## 4. Liste des figures

D'autres caractéristiques et avantages de l'invention apparaîtront plus clairement à la lecture de la description suivante d'un mode de réalisation particulier, donné à titre de simple exemple illustratif et non limitatif, et des dessins annexés, parmi lesquels :

- la figure 1, déjà commentée en relation avec l'art antérieur, présente une chaîne de transmission dans un système MIMO ;
- la figure 2 illustre les principales étapes du procédé de décodage selon l'invention ;
- les figures 3A à 3D, 4A, et 4B illustrent les performances de l'invention par rapport aux solutions de l'art antérieur, dans un système MIMO mettant en oeuvre deux antennes d'émission et deux antennes de réception ;
- la figure 5 présente la structure d'un dispositif de décodage mettant en oeuvre le procédé de décodage de l'invention.

## 5. Description d'un mode de réalisation de l'invention

### 5.1 Principe général

Le principe général de l'invention repose sur la sélection d'une technique de décodage spatio-temporel parmi plusieurs disponibles, au niveau d'un récepteur, permettant notamment de s'adapter au mieux à l'application envisagée, dans le cadre d'une transmission MIMO.

En particulier, l'invention permet de sélectionner une technique de décodage optimale au sens du maximum de vraisemblance (en anglais ML ou « Maximum Likelihood »), ou sous-optimale, c'est-à-dire ne permettant pas d'atteindre les performances ML, en tenant compte d'au moins un critère de sélection.

On rappelle notamment que les techniques de décodage sous-optimales, de type ZF, MMSE, ZF-DFE, MMSE-DFE, etc, présentent une faible complexité, mais des performances médiocres.

Au contraire, les techniques de décodage optimales, telles que les décodeurs par sphères, les décodeurs basés sur l'algorithme de Schnorr-Euchner, les décodeurs de Fano, les décodeurs à pile, etc, permettent d'atteindre des performances ML, mais au prix d'une forte complexité, croissante en fonction du nombre d'antennes du système de transmission.

Ainsi, selon l'invention, il est possible d'adapter la technique de décodage à la situation, et éventuellement de changer de technique de décodage sélectionnée en cours de transmission, de façon à utiliser la technique la mieux adaptée.

La figure 2 illustre les principales étapes du procédé de décodage d'un signal reçu par un récepteur comprenant une ou plusieurs antennes de réception selon l'invention.

Ces étapes peuvent être mises en oeuvre dans un module de décodage spatio-temporel 17 tel qu'illustré en figure 1.

Plus précisément, après réception du signal Y sur les différentes antennes de réception, on sélectionne 21 une technique de décodage représentative d'un codage espace/temps mis en oeuvre en émission (encore appelée technique de décodage spatio-temporel), parmi au moins deux techniques disponibles dans le récepteur. Cette étape de sélection 21 tient compte d'au moins un critère de sélection.

On décode 22 ensuite le signal reçu Y en mettant en oeuvre la technique de décodage sélectionnée au cours de l'étape de sélection 21. Le signal égalisé en sortie du module de décodage spatio-temporel alimente ensuite un module de démodulation.

On peut noter que le procédé selon l'invention peut être mis en oeuvre de diverses manières, notamment sous forme câblée ou sous forme logicielle.

En particulier, le récepteur peut contenir un décodeur séquentiel comprenant un biais variable. En effet, un tel décodeur permet d'atteindre des performances optimales ou sous-optimales par simple ajustement du biais. Ainsi, un récepteur mettant en oeuvre le procédé de décodage selon l'invention n'est pas nécessairement plus complexe structurellement qu'un récepteur classique, puisqu'il est possible, à partir des ressources matérielles (« hardware ») d'un seul décodeur, d'obtenir une technique de décodage optimale et une technique de décodage sous-optimale, en modifiant la valeur du biais.

On décrit ci-après différents critères de sélection pouvant être pris en considération pour la sélection d'une technique de décodage. Bien entendu, ces exemples ne sont pas limitatifs et d'autres critères de sélection pourraient être proposés.

### 5.2 Premier critère de sélection

On considère par exemple un premier critère de sélection tenant compte de la qualité du canal de transmission, et des évolutions du canal en cours de transmission.

On rappelle tout d'abord que les travaux de Shannon de 1948 sur la théorie de l'information (*« Mathematical Theory of Communication »*) permettent de déduire les limites des systèmes de transmission. En particulier, un paramètre important est la capacité du canal. Cette valeur permet de déterminer la quantité d'information qui peut être transmise dans le canal sans erreur.

Par exemple, pour un canal MIMO à évanouissements rapides, la capacité ergodique, qui correspond au maximum de l'information mutuelle (tel que défini dans le document « Capacity of multi-antenna gaussian channels », Talatar E., International Technical Report, Bell laboratories, 1995), peut s'écrire sous la forme suivante :

$$C = E_H \left\{ \log_2 \left( \det \left( I_{n_r} + \frac{\rho}{n_t} HH^T \right) \right) \right\}$$

avec :

- H la matrice de transfert du canal ;
- $n_t$ le nombre d'antennes d'émission ;
- $n_r$ le nombre d'antennes de réception ; et
- $\rho$ le rapport signal à bruit par antenne de réception.

Pour un canal MIMO à évanouissement par blocs, la capacité au sens strict de Shannon est nulle. On définit donc une capacité instantanée $C(H)$ sous la forme suivante :

$$C(H) = E_H \left\{ \log_2 \left( \det \left( I_{n_r} + \frac{\rho}{n_t} HH^T \right) \right) \right\}$$

La probabilité de coupure du canal (en anglais « outage probability ») correspond à la probabilité que la capacité instantanée $C(H)$ soit inférieure au rendement de transmission $R$ exprimé en bits, correspondant au nombre de bits transmis par utilisation canal :

$$Pout(R) = \Pr\{C(H) < R\}$$

Autrement dit :

- si $C(H) < R$ : le canal de transmission est de trop mauvaise qualité et il n'est pas possible de décoder correctement les données transmises ;
- si $C(H) \geq R$ : le canal de transmission est de bonne qualité et permet de décoder correctement les données transmises.

Selon ce premier mode de réalisation de l'invention, on tient compte de cette probabilité de coupure pour sélectionner une technique de décodage parmi plusieurs techniques disponibles au niveau du récepteur.

Plus précisément, si $C(H) < R$, c'est-à-dire qu'on est en situation de dépassement, et qu'on ne réussira pas à décoder correctement le message transmis, alors la technique de décodage sélectionnée est une technique sous-optimale, comme le ZF ou le ZF-DFE.

Au contraire, si $C(H) \geq R$, c'est-à-dire qu'on n'est pas en situation de dépassement, et qu'on peut donc décoder correctement le message transmis, alors la technique de décodage sélectionnée est une technique optimale au sens ML, comme le décodage par sphères, l'algorithme de Schnorr-Euchner, ou le décodeur à pile avec un biais b égal à 0.

En particulier, il est possible que le canal de transmission varie au cours de la communication, par exemple si le récepteur est mobile.

Il est alors possible de sélectionner une nouvelle technique de décodage, qui pourra être mieux adaptée au canal de transmission. En effet, les étapes de sélection et de décodage peuvent être mises en oeuvre de façon adaptative selon un aspect particulier de l'invention, périodiquement et/ou en fonction d'une variation du canal de transmission.

Par exemple, si le canal de transmission est de bonne qualité, la technique de décodage sélectionnée est optimale. Il s'agit par exemple d'une technique de décodage séquentielle avec un biais nul ($b = 0$). Ensuite, si la qualité du canal se dégrade, il est possible de changer de technique de décodage, en passant à une technique sous-optimale. Par exemple, pour changer de technique de décodage, on modifie le biais ($b \neq 0$). Si le canal redevient de bonne qualité, il est possible de revenir à une technique de décodage optimale, en modifiant de nouveau la valeur du biais ($b = 0$).

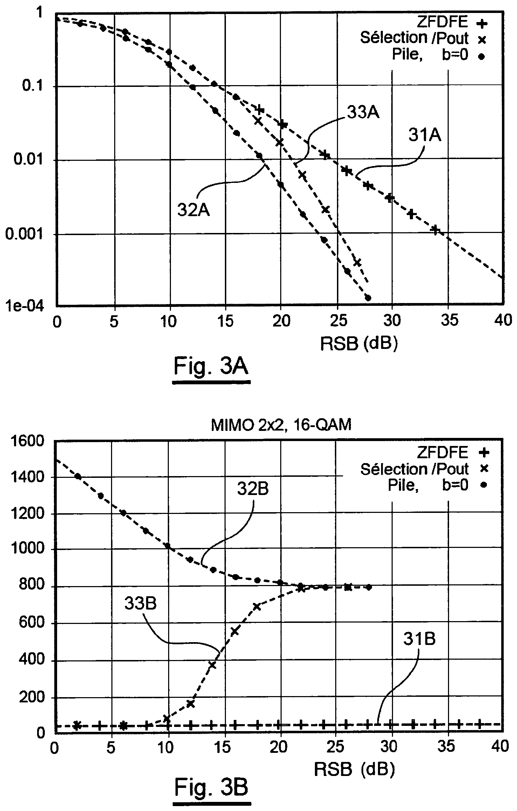

Les figures 3A à 3D illustrent notamment les performances de l'invention par rapport aux solutions de l'art antérieur, dans un système MIMO utilisant une modulation d'amplitude 16-QAM.

Plus précisément, les figures 3A et 3B comparent respectivement le taux d'erreur par mot en fonction du rapport signal à bruit (SNR) en dB, et la complexité en nombre d'opérations (nombre de multiplications) en fonction du rapport signal à bruit (SNR) en dB, dans un système mettant en oeuvre deux antennes d'émission et deux antennes de réception, et utilisant :

- une technique de décodage sous-optimale de type ZF-DFE $31_A$, $31_B$ selon l'art antérieur ;
- une technique de décodage optimale de type ML $32_A$, $32_B$ selon l'art antérieur ;
- la technique de décodage selon l'invention mettant en oeuvre un critère de sélection tenant compte de la probabilité de coupure $33_A$, $33_B$.

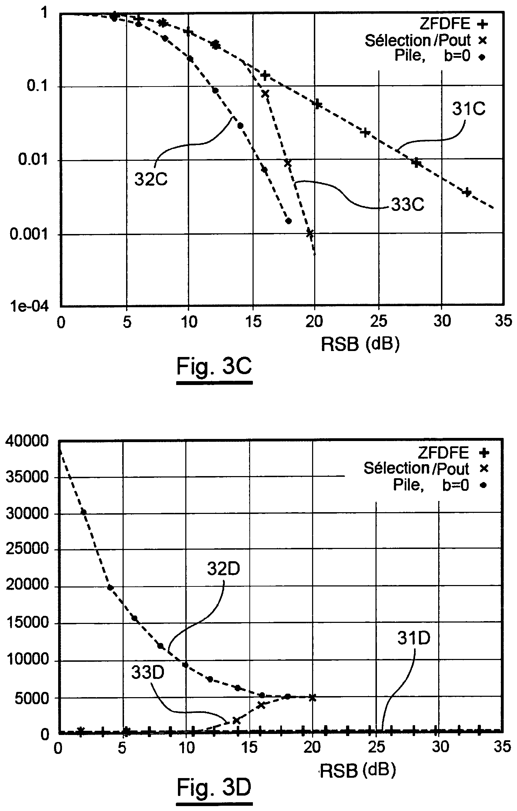

Les figures 3C et 3D comparent respectivement le taux d'erreur par mot en fonction du rapport signal à bruit (SNR) en dB, et la complexité en nombre d'opérations (multiplications) en fonction du rapport signal à bruit (SNR) en dB, dans un système mettant en oeuvre quatre antennes d'émission et quatre antennes de réception, et utilisant :

- une technique de décodage sous-optimale de type ZF-DFE $31_C$, $31_D$ selon l'art antérieur ;
- une technique de décodage optimale de type ML $32_C$, $32_D$ selon l'art antérieur ;
- la technique de décodage selon l'invention mettant en oeuvre un critère de sélection tenant compte de la probabilité de coupure $33_C$, $33_D$.

On constate sur ces courbes de performances que ce premier critère de sélection basé sur la probabilité de coupure permet de réduire considérablement la complexité de décodage (en nombre de multiplications), tout en conservant de bonnes performances (perte inférieure à 2 dB sur le taux d'erreur).

Par exemple, le tableau suivant illustre le taux de sélection d'une technique de décodage sous-optimale (par exemple ZF-DFE) et d'une technique de décodage optimale (par exemple ML) pour différents rapports signal à bruit, pour une transmission dans un système multi-antennes mettant en oeuvre deux antennes d'émission et deux antennes de réception, et utilisant une modulation 16-QAM.

Ce tableau illustre également le gain en complexité et la perte de performance en dB par rapport aux techniques optimales au sens ML.

On constate par exemple que pour un rapport signal à bruit de 10dB, le gain en complexité est proche de 90%, avec une perte de moins de 2dB en taux d'erreur par rapport aux performances d'un décodeur à maximum de vraisemblance.

| SNR (dB) au niveau du récepteur | 6 | 10 | 14 | 18 | 22 | 26 |
|---|---|---|---|---|---|---|
| ZF-DFE (%) | 100 | 95,52 | 56,70 | 13,44 | 1,58 | 0,001 |
| ML (%) | 0 | 4,48 | 43,3 | 85,56 | 98,42 | 99,99 |
| Gain moyen (en pourcentage par rapport au décodage ML) | 96,68 | 92,73 | 59,02 | 16,53 | 2,35 | 0,16 |
| Perte moyenne (en dB) | 0,92 | 1,29 | 2,2 | 4,81 | 2,59 | 1,48 |

*5.3 Deuxième critère de sélection*

On considère désormais un deuxième critère de sélection tenant compte des spécifications du système.

Plus précisément, on considère un deuxième mode de réalisation de l'invention selon lequel on sélectionne une technique de décodage parmi plusieurs techniques disponibles au niveau du récepteur en tenant compte d'un ou plusieurs taux d'erreur cible correspondant à un ou plusieurs rapports signal à bruit.

Par exemple, on peut définir un taux d'erreur cible correspondant à un écart de 1 dB au maximum par rapport au taux d'erreur obtenu avec un décodeur ML.

On définit ainsi une première plage de rapports signal à bruit $SNR^1(dB) = [0,12]$ pour un taux d'erreur cible $Pe^1_{cible}$, une deuxième plage de rapports signal à bruit $SNR^2(dB) = [12,14]$ pour un taux d'erreur cible $Pe^2_{cible}$, une

troisième plage de rapports signal à bruit $SNR^3(dB) = [14,16]$ pour un taux d'erreur cible $Pe^3_{cible}$, etc, permettant de respecter un écart maximum de 1dB par rapport aux performances ML.

La technique de décodage sélectionnée lors de l'étape de sélection est celle qui permet de respecter les performances visées, c'est-à-dire celle qui présente un taux d'erreur inférieur au taux d'erreur cible pour une plage de rapports signal à bruit donnée.

En particulier, une fois qu'une technique de décodage permettant d'atteindre ces performances est identifiée, il n'est pas nécessaire de balayer les autres techniques de décodage.

Il est également possible de pré-sélectionner plusieurs techniques de décodage permettant de respecter le ou les taux d'erreur cibles.

Dans ce cas, l'étape de sélection peut sélectionner la technique de décodage présentant le ou les taux d'erreur les plus faibles, ou la technique de décodage la moins complexe, parmi les différentes techniques de décodage pré-sélectionnées.

Ainsi, la technique de décodage sélectionnée selon ce deuxième critère de sélection offre un compromis entre les performances (en termes de taux d'erreur) et la complexité (en termes d'opérations mathématiques) du système de transmission.

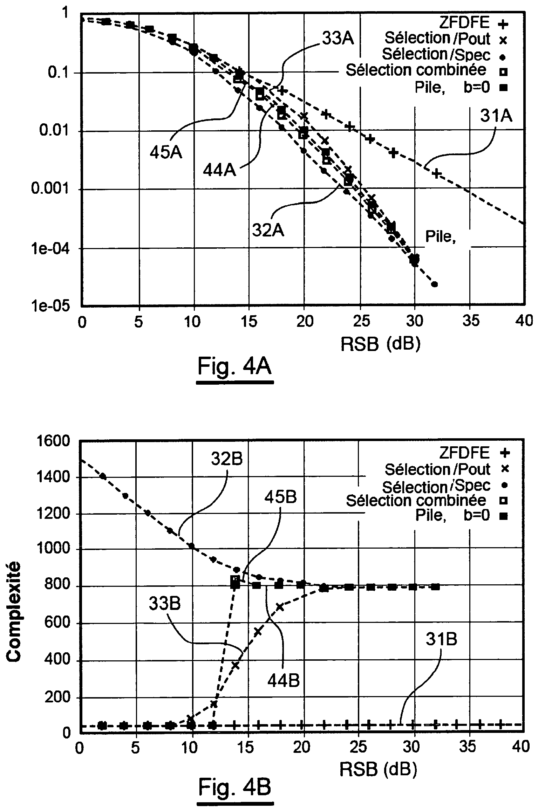

Les figures 4A et 4B illustrent les performances de l'invention par rapport aux solutions de l'art antérieur, dans un système MIMO mettant en oeuvre deux antennes d'émission et deux antennes de réception.

Plus précisément, la figure 4A compare le taux d'erreur par mot en fonction du rapport signal à bruit (SNR) en dB pour une modulation d'amplitude 16-QAM utilisant :

- la technique de décodage sous-optimale de type ZF-DFE $31_A$ selon l'art antérieur ;
- la technique de décodage optimale de type ML $32_A$ selon l'art antérieur ;
- la technique de décodage selon l'invention mettant en oeuvre un critère de sélection tenant compte de la probabilité de coupure $33_A$ ;

- la technique de décodage selon l'invention mettant en oeuvre un critère de sélection tenant compte d'un ou plusieurs taux d'erreur cible(s) $44_A$.

La figure 4B compare la complexité en nombre d'opérations (multiplications) en fonction du rapport signal à bruit (SNR) en dB pour une modulation d'amplitude 16-QAM utilisant :

- une technique de décodage sous-optimale de type ZF-DFE $31_B$ selon l'art antérieur ;
- une technique de décodage optimale de type ML $32_B$ selon l'art antérieur ;
- la technique de décodage selon l'invention mettant en oeuvre un critère de sélection tenant compte de la probabilité de coupure $33_B$ ;
- la technique de décodage selon l'invention mettant en oeuvre un critère de sélection tenant compte d'un ou plusieurs taux d'erreur cible(s) $44_B$.

On constate sur ces courbes de performances que le deuxième critère de sélection basé sur les spécifications du système de transmission (par exemple un taux d'erreur cible) permet également de réduire considérablement la complexité de décodage (en nombre de multiplications), tout en conservant de bonnes performances.

De plus, la technique de décodage sélectionnée selon ce critère de sélection tenant compte des spécifications du système offre de meilleures performances qu'une technique de décodage sélectionnée selon le critère de sélection tenant compte des conditions de transmission.

Il permet notamment de choisir un bon compromis entre les performances et la complexité du système de transmission.

Par exemple, le tableau suivant illustre la technique de décodage sélectionnée parmi le décodage sous-optimal ZF-DFE et le décodage séquentiel à biais variable permettant de respecter la contrainte d'un taux d'erreur cible correspondant à un écart de 1 dB au maximum par rapport au taux d'erreur obtenu avec un décodeur ML, pour différentes plages de rapports signal à bruit. En particulier, on rappelle que le décodage séquentiel à biais variable permet d'atteindre des performances optimales avec un biais b égal à 0, et des performances sous-optimales avec un biais b différent de 0.

Ce tableau illustre également la perte de performance en dB par rapport aux techniques optimales au sens ML :

| SNR (dB) au niveau du récepteur | [0-12] | [12-14] | [14-16] | [16-18] | [18-20] |
|---|---|---|---|---|---|
| Technique de décodage sélectionnée | ZF-DFE | b=1 | b=0,5 | b=0,3 | b=0,15 |
| Perte moyenne (en dB) | 0,92 | 1 | 1,08 | 0,86 | 1 |

| [20-22] | [22-24] | [24-26] | [26-28] | [28-30] | [30-32] | $\geq 32$ |
|---|---|---|---|---|---|---|
| b=0,08 | b=0,05 | b=0,04 | b=0,02 | b=0,015 | b=0,005 | b=0 |
| 1 | 0,8 | 1 | 0,74 | 0,57 | 0 | 0 |

*5.4 Troisième critère de sélection*

Finalement, on considère un troisième critère tenant compte à la fois des spécifications du système et des conditions de transmission, c'est-à-dire de la probabilité de coupure.

Plus précisément, selon ce troisième mode de réalisation, on définit tout d'abord des plages de rapports signal à bruit permettant de respecter un taux d'erreur cible.

De nouveau, si on choisit un taux d'erreur cible correspondant à un écart de 1 dB au maximum par rapport au taux d'erreur obtenu avec un décodeur ML, on peut définir les plages $SNR^1(dB) = [0,12]$, $SNR^2(dB) = [12,14]$, $SNR^3(dB) = [14,16]$, ..., $SNR^{12}(dB) = [32, \infty]$.

Ensuite, pour chacune de ces plages, on applique le critère de sélection basé sur la probabilité de coupure.

On considère par exemple la plage $SNR^1(dB) = [0,12]$ :

- si la capacité instantanée du canal de transmission est inférieure au rendement en bits dans cette plage de rapports signal à bruit, alors on est en situation de dépassement, et on sélectionne une technique de décodage sous-optimale pour cette plage ;
- sinon, on n'est pas en situation de dépassement, et on sélectionne une technique de décodage optimale.

On réitère ensuite cette opération pour les différentes plages.

On se réfère de nouveau aux figures 4A et 4B illustrant les performances de l'invention par rapport aux solutions de l'art antérieur, dans un système MIMO mettant en oeuvre deux antennes d'émission et deux antennes de réception.

Plus précisément, la figure 4A compare le taux d'erreur par mot en fonction du rapport signal à bruit (SNR) en dB pour une modulation d'amplitude 16-QAM utilisant la technique de décodage selon l'invention combinant les deux critères de sélection $45_A$.

La figure 4B compare la complexité en nombre d'opérations (multiplications) en fonction du rapport signal à bruit (SNR) en dB pour une modulation d'amplitude 16-QAM utilisant la technique de décodage selon l'invention combinant les deux critères de sélection $45_B$.

On constate sur ces courbes de performances que le troisième critère de sélection basé sur la combinaison des deux premiers critères permet également de réduire considérablement la complexité de décodage (en nombre de multiplications), tout en conservant de bonnes performances.

En particulier, par rapport au critère de sélection basé sur la probabilité de coupure uniquement, cette sélection basée sur une combinaison de plusieurs critères de sélection permet de sélectionner une technique de décodage sous-optimale différente selon le rapport signal à bruit (par exemple une technique de type ZF-DFE si le rapport signal à bruit est compris entre 0 et 12dB, et une technique de type MMSE-DFE si le rapport signal à bruit est compris entre 12 et 14dB).

De plus, par rapport au critère de sélection basé sur les spécifications du système uniquement, cette sélection basée sur une combinaison de plusieurs critères de sélection permet de lisser la courbe de performance en maintenant une perte de 1dB au plus par rapport aux performances obtenues avec un décodeur ML.

Par ailleurs, les performances en termes de taux d'erreur sont améliorées puisque la prise en compte de la probabilité de coupure permet d'éliminer les situations au cours desquelles le canal est de très mauvaise qualité (échec du décodage).

Par exemple, le tableau suivant illustre la technique de décodage sélectionnée parmi le décodage sous-optimal ZF-DFE et le décodage séquentiel à biais variable, permettant de respecter la contrainte d'un taux d'erreur cible correspondant à un écart de 1 dB au maximum par rapport au taux d'erreur obtenu avec un décodeur ML, pour différentes plages de rapports signal à bruit, et tenant compte de la probabilité de coupure à l'intérieur de chacune de ces plages.

Ce tableau illustre également la probabilité de coupure du canal Pout, en pourcentage :

| SNR (dB) au niveau du récepteur | [0-12] | [12-14] | [14-16] | [16-18] | [18-20] |
|---|---|---|---|---|---|
| Technique de décodage sélectionnée | ZF-DFE | b=1 | b=0,5 | b=0,3 | b=0,15 |
| Pout (en %) | 97 | 82 | 62 | 13 | 5 |

| [20-22] | [22-24] | [24-26] | [26-28] | [28-30] | [30-32] | $\geq 32$ |
|---|---|---|---|---|---|---|
| b=0,08 | b=0,05 | b=0,04 | b=0,02 | b=0,015 | B=0,005 | b=0 |
| 1 | $\leq 1$ | $\leq 1$ | $\leq 1$ | $\leq 1$ | $\leq 1$ | $\leq 1$ |

*5.5 Augmentation du nombre d'antennes*

Les figures présentées montrent ainsi une nette amélioration des performances et/ou de la complexité du système multi-antennes comprenant deux antennes d'émission et deux antennes de réception en utilisant la technique selon l'invention.

En particulier, la solution proposée est particulièrement intéressante lorsque le nombre d'antennes augmente, puisqu'elle permet de réduire considérablement la complexité du système de transmission tout en présentant de très bonnes performances.

*5.6 Structure du dispositif de décodage*

On présente finalement, en relation avec la figure 5, la structure simplifiée d'un dispositif de décodage mettant en oeuvre une technique de décodage selon l'invention.

Un tel dispositif de décodage, intégré par exemple dans un récepteur, comprend une mémoire 51 constituée d'une mémoire tampon, une unité de traitement 52, équipée par exemple d'un microprocesseur μP, et pilotée par le programme d'ordinateur 53, mettant en oeuvre le procédé de décodage selon l'invention.

A l'initialisation, les instructions de code du programme d'ordinateur 53 sont par exemple chargées dans une mémoire RAM avant d'être exécutées par le processeur de l'unité de traitement 52. L'unité de traitement 52 reçoit en entrée le signal Y reçu sur les différentes antennes de réception. Le microprocesseur de l'unité de traitement 52 met en oeuvre les étapes du procédé de décodage décrit précédemment, selon les instructions du programme d'ordinateur 53, pour décider de la technique de décodage la mieux adaptée. Pour cela, le dispositif de décodage comprend, outre la mémoire tampon 51, des moyens de sélection d'une technique de décodage représentative d'un codage espace/temps mis en oeuvre en émission, et des moyens de décodage du signal mettant en oeuvre la technique de décodage sélectionnée. Ces moyens sont pilotés par le microprocesseur de l'unité de traitement 52.

L'unité de traitement 52 délivre donc un signal égalisé.

**Revendications**

1. Procédé de décodage spatio-temporel d'un signal émis par un émetteur via un canal de transmission et reçu par un récepteur comprenant au moins une antenne de réception, le procédé comprenant :

   - une étape de sélection (21), parmi au moins deux techniques de décodage spatio-temporel disponibles dans ledit récepteur, d'une technique de décodage spatio-temporel représentative d'un codage espace/temps mis en oeuvre en émission, ladite étape de sélection tenant compte d'au moins un critère de sélection,
ladite étape de sélection comprenant la sélection d'une technique de décodage sous-optimale lorsque la capacité instantanée dudit canal de transmission est inférieure au rendement de transmission, en bits par utilisation canal, et la sélection d'une technique de décodage optimale au sens du maximum de vraisemblance lorsque la capacité instantanée dudit canal de transmission est supérieure ou égale au rendement de transmission ;
- une étape de décodage (22) dudit signal mettant en oeuvre la technique de décodage spatio-temporel sélectionnée ;

lesdites étapes de sélection (21) et de décodage (22) étant mises en oeuvre de façon adaptative en fonction d'une variation dudit canal de transmission.

2. Procédé de décodage selon la revendication 1, **caractérisé en ce qu'**au moins un critère de sélection tient compte d'au moins un taux d'erreur cible en fonction d'un rapport signal à bruit.

3. Procédé de décodage selon la revendication 2, **caractérisé en ce que** ladite étape de sélection pré-sélectionne une ou plusieurs techniques de décodage spatio-temporel permettant de respecter un taux d'erreur cible.

4. Procédé de décodage selon la revendication 3, **caractérisé en ce que** ladite étape de sélection sélectionne la technique de décodage spatio-temporel présentant le taux d'erreur le plus faible parmi les techniques de décodage spatio-temporel pré-sélectionnées.

5. Procédé de décodage selon la revendication 1, **caractérisé en ce qu'**il met en oeuvre un premier critère de sélection tenant compte d'au moins un taux d'erreur cible en fonction d'un rapport signal à bruit, de façon à définir au moins deux plages de rapports signal à bruit, et, pour chacune desdites plages, un deuxième critère de sélection tenant compte d'une probabilité de coupure dudit canal de transmission dans ladite plage.

6. Procédé de décodage selon la revendication 1, **caractérisé en ce que** lesdites techniques de décodage spatio-temporel appartiennent au groupe comprenant :

   - une technique de décodage linéaire « Zero-Forcing » (ZF) ;
   - une technique de décodage linéaire « Minimum Mean Square Error » (MMSE) ;
   - une technique de décodage à retour de décision « Zero-Forcing - Decision Feedback Equalization » (ZF-DFE) ;
   - une technique de décodage à retour de décision « Minimum Mean Square Error - Decision Feedback Equalization » (MMSE-DFE) ;
   - une technique de décodage par sphères ;
   - une technique de décodage basée sur l'algorithme Schnorr-Euchner ;
   - une technique de décodage séquentiel de Fano ;
   - une technique de décodage séquentiel à pile ;
   - une technique de décodage séquentiel avec un biais.

7. Produit programme d'ordinateur téléchargeable depuis un réseau de communication et/ou enregistré sur un support lisible par ordinateur et/ou exécutable par un processeur, **caractérisé en ce qu'**il comprend des instructions de code de programme pour la mise en oeuvre du procédé de décodage selon l'une au moins des revendications 1 à 6 lorsqu'il est exécuté sur un ordinateur.

8. Dispositif de décodage d'un signal émis par un émetteur via un canal de transmission et reçu par un récepteur comprenant au moins une antenne de réception,
le dispositif comprenant :

   - des moyens de sélection (21), parmi au moins deux techniques de décodage spatio-temporel disponibles dans ledit récepteur, d'une technique de décodage spatio-temporel représentative d'un codage espace/temps mis en oeuvre en émission, lesdits moyens de sélection (21) comprenant des moyens de prise en compte d'au moins un critère de sélection,
   lesdits moyens de sélection étant adaptés pour sélectionner une technique de décodage sous-optimale lorsque la capacité instantanée dudit canal de transmission est inférieure au rendement de transmission, en bits par utilisation canal, et pour sélectionner une technique de décodage optimale au sens du maximum de vraisemblance lorsque la capacité instantanée dudit canal de transmission est supérieure ou égale au rendement de transmission ;

- des moyens de décodage (22) dudit signal comprenant des moyens de mise en oeuvre de la technique de décodage spatio-temporel sélectionnée ;
et
- des moyens de mise en oeuvre desdits moyens de sélection (21) et desdits moyens de décodage (22) de façon adaptative, en fonction d'une variation dudit canal de transmission.

**Patentansprüche**

1. Räumlich-zeitliches Dekodierverfahren eines durch einen Sender über einen Übertragungskanal gesendeten Signals, welches durch einen Empfänger empfangen wird, welcher mindestens eine Empfangsantenne beinhaltet, wobei das Verfahren Folgendes beinhaltet:

   - einen Schritt des Auswählens (21), aus mindestens zwei räumlich-zeitlichen Dekodiertechniken, welche in dem Empfänger verfügbar sind, einer räumlich-zeitlichen Dekodiertechnik, welche eine Raum-/Zeit-Kodierung darstellt, welche beim Senden umgesetzt wird, wobei der Auswählschritt mindestens ein Auswahlkriterium berücksichtigt,
   wobei der Auswählschritt die Auswahl einer suboptimalen Dekodiertechnik beinhaltet, wenn die augenblickliche Kapazität des Übertragungskanals die Übertragungseffizienz in Bit pro Kanalnutzung unterschreitet, und die Auswahl einer optimalen Dekodiertechnik im Sinne der höchsten Wahrscheinlichkeit, wenn die augenblickliche Kapazität des Übertragungskanals größer als die oder gleich der Übertragungseffizienz ist;
   - einen Schritt des Dekodierens (22) des Signals, welcher die ausgewählte räumlich-zeitliche Dekodiertechnik umsetzt;
   wobei die Schritte des Auswählens (21) und des Dekodierens (22) adaptativ entsprechend einer Variation des Übertragungskanals umgesetzt werden.

2. Dekodierverfahren nach Anspruch 1, **dadurch gekennzeichnet, dass** mindestens ein Auswahlkriterium mindestens eine Ziel-Fehlerquote entsprechend einem Signal-zu-Rauschen-Verhältniss berücksichtigt.

3. Dekodierverfahren nach Anspruch 2, **dadurch gekennzeichnet, dass** der Auswählschritt eine oder mehrere räumlich-zeitliche Dekodiertechniken vorwählt, welche es ermöglicht/ermöglichen, eine Ziel-Fehlerquote einzuhalten.

4. Dekodierverfahren nach Anspruch 3, **dadurch gekennzeichnet, dass** der Auswählschritt diejenige räumlich-zeitliche Dekodiertechnik auswählt, welche die geringste Fehlerquote aus den vorgewählten räumlich-zeitlichen Dekodiertechniken aufweist.

5. Dekodierverfahren nach Anspruch 1, **dadurch gekennzeichnet, dass** es ein erstes Auswahlkriterium umsetzt, welches mindestens eine Ziel-Fehlerquote entsprechend einem Signal-zu-Rauschen-Verhältnis berücksichtigt, so dass mindestens zwei Signal-zu-Rauschen-Verhältnis-Bereiche definiert werden, und, für jeden der Bereiche, ein zweites Auswahlkriterium, welches eine Ausfallwahrscheinlichkeit des Übertragungskanals in dem Bereich berücksichtigt.

6. Dekodierverfahren nach Anspruch 1, **dadurch gekennzeichnet, dass** die räumlich-zeitlichen Dekodiertechniken zu der Gruppe gehören, welche folgende Elemente beinhaltet:

   - eine lineare Dekodiertechnik "Zero-Forcing" (ZF);
   - eine lineare Dekodiertechnik "Minimum Mean Square Error" (MMSE);
   - eine Dekodiertechnik mit Entscheidungsrückmeldung "Zero-Forcing - Decision Feedback Equalization" (ZF-DFE);
   - eine Dekodiertechnik mit Entscheidungsrückmeldung "Minimum Mean Square Error - Decision Feedback Equalization" (MMSE-DFE);
   - eine Kugeldekodiertechnik;
   - eine Dekodiertechnik, welche auf dem Schnorr-Euchner-Algorithmus beruht;
   - eine sequenzielle Fano-Dekodiertechnik;
   - eine sequenzielle Stapel-Dekodiertechnik;
   - eine sequenzielle Dekodiertechnik mit einem Bias.

7. Computerprogrammprodukt, welches von einem Kommunikationsnetzwerk downloadbar ist und/oder auf einem computerlesbaren Träger gespeichert ist und/oder durch einen Prozessor ausführbar ist, **dadurch gekennzeichnet, dass** es Programmecode-Befehle zur Umsetzung des Dekodierverfahrens nach mindestens einem der Ansprüche 1 bis 6 beinhaltet, wenn es auf einem Computer ausgeführt wird.

8. Vorrichtung zum Dekodieren eines durch einen Sender über einen Übertragungskanal gesendeten Signals, welches durch einen Empfänger empfangen wird, welcher mindestens eine Empfangsantenne beinhaltet, wobei die Vorrichtung Folgendes beinhaltet:

- Mittel zum Auswählen (21), aus mindestens zwei räumlich-zeitlichen Dekodiertechniken, welche in dem Empfänger verfügbar sind, einer räumlich-zeitlichen Dekodiertechnik, welche eine Raum-/Zeit-Kodierung darstellt, welche beim Senden umgesetzt wird, wobei die Auswählmittel (21) Mittel zur Berücksichtigung von mindestens einem Auswahlkriterium beinhalten, wobei die Auswahlmittel geeignet sind, eine suboptimale Dekodiertechnik auszuwählen, wenn die augenblickliche Kapazität des Übertragungskanals die Übertragungseffizienz in Bit pro Kanalnutzung unterschreitet, und zum Auswählen einer optimalen Dekodiertechnik im Sinne der höchsten Wahrscheinlichkeit, wenn die augenblickliche Kapazität des Übertragungskanals größer als die oder gleich der Übertragungseffizienz ist; - Mittel zum Dekodieren (22) des Signals, welche Mittel zur Umsetzung der ausgewählten räumlich-zeitlichen Dekodiertechnik beinhalten; und - Mittel zum Umsetzen der Auswahlmittel (21) und der Dekodiermittel (22) in adaptiver Weise, entsprechend einer Variation des Übertragungskanals.

**Claims**

1. A method for space-time decoding of a signal sent by a sender through a transmission channel and received by a receiver comprising at least one receiving antenna, the method comprising:

- a selection step (21), among at least two space-time decoding techniques available in said receiver, a space-time decoding technique that is representative of a space/time encoding implemented at emission, said selection step taking account of at least one selection criterion, said selection step comprising the selection of a sub-optimal decoding technique when the instantaneous capacity of said transmission channel is lower than the transmission rate, in terms of bits per channel use, and the selection of an optimal decoding technique in terms of maximum likelihood when the instantaneous capacity of said transmission channel is greater than or equal to the transmission rate, - a decoding step (22) of said signal implementing the selected method for space-time decoding, said selection (21) and decoding (22) steps being implemented adaptively, as a function of a variation of said transmission channel.

2. The decoding method according to claim 1, **characterized in that** at least one selection criterion takes account of at least one target error rate as a function of a signal-to-noise-ratio.

3. The decoding method according to claim 2, **characterized in that** said selection step pre-selects one or more space-time decoding techniques complying with a target error rate.

4. The decoding method according to claim 3, **characterized in that** said selection step selects the space-time decoding technique having the lowest error rate among the pre-selected space-time decoding techniques.

5. The decoding method according to claim 1, **characterized in that** the method applies a first selection criterion taking account at least one target error rate as a function of a signal-to-noise ratio so as to define at least two ranges of signal-to-noise ratios and, for each of said ranges, a second selection criterion taking account of an outage probability of said transmission channel in said range.

6. The decoding method according to claim 1, **characterized in that** said space-time decoding techniques belong to the group comprising:

- a "Zero-Forcing" (ZF) linear decoding technique

- a "Minimum Mean Square Error" (MMSE) linear decoding technique,
- a "Zero-Forcing - Decision Feedback Equalization" (ZF-DFE) decoding technique,
- a "Minimum Mean Square Error - Decision Feedback Equalization" (MMSE-DFE) decoding technique,
- a sphere decoding technique,
- a decoding technique based on the Schnorr-Euchner algorithm,
- a Fano sequential decoding technique,
- a sequential stack decoding technique,
- a sequential decoding technique with a bias.

7. A computer software product downloadable from a communications network and/or stored on a computer readable medium and/or executable by a processor, **characterized in that** it comprises program code instructions for implementing the decoding method according to at least one of claims 1 to 6, when executed on a computer.

8. A device for decoding a signal sent by a sender through a transmission channel and received by a receiver comprising at least one receiving antenna,
the device comprising:

- means for selecting (21) among at least two space-time decoding techniques available in said receiver, a space-time decoding technique that is representative of a space/time encoding implemented at emission, said means for selecting (21) comprising means for taking account of at least one selection criterion,
said selection means being adapted to select a sub-optimal decoding technique when the instantaneous capacity of said transmission channel is lower than the transmission rate, in terms of bits per channel use, and to select a an optimal decoding technique in terms of maximum likelihood when the instantaneous capacity of the transmission channel is greater than or equal to the transmission rate,
- means for decoding (22) said signal, comprising means for implementing the selected space-time decoding technique,
and
- means for implementing said selection means (21) and decoding (22) adaptively, as a function of a variation of said transmission channel.

Fig. 1

Fig. 2

Fig. 5

Fig. 3A

MIMO 2x2, 16-QAM

Fig. 3B

Fig. 3C

Fig. 3D

Fig. 4A

Fig. 4B

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2007087540 A

**Littérature non-brevet citée dans la description**

- A hybrid sequential-Viterbi decoder. **ASENSTORFER et al.** 1986 IEEE International,Symposium On Information Theory (ISIT). Abstracts of Papers. 140
- **LAU et al.** A Sequential Soft-Decision Decoder for Reed-Solomon Codes Applied to Encoded PSK in Rayleigh-Fading Channels. *IEEE Transactions On Vehicular Technology,* vol. 45 (1
- A Hybrid M-algorithm/Sequential Decoder for Convolutional and Trellis Codes. **WANG, CASTELLO.** Department Of Electrical Engineering. University Of Notre Dame, 1-5
- **A. D. MURUGAN ; H. EL GAMAL ; M. O. DAMEN ; G. CAIRE.** *A Unified Frameworkfor Tree Search Decoding: Rediscovering the Sequential Decoder,* 13 Mai 2005
- **TALATAR E.** Capacity of multi-antenna gaussian channels. *International Technical Report, Bell laboratories,* 1995